# EUROPÄISCHE PATENTSCHRIFT

(11) **EP 3 691 448 B1**
(45) Veröffentlichungstag und Bekanntmachung des Hinweises auf die Patenterteilung: **18.05.2022**
(21) Anmeldenummer: 18769155.5
(22) Anmeldetag: 11.09.2018
(51) Int. Cl.: A01K 79/00

(54) **VERFAHREN ZUR VERMINDERUNG VON BEIFANG IN DER FISCHEREI**
METHOD FOR REDUCING BYCATCH IN FISH INDUSTRY
MÉTHODE DE RÉDUCTION DE PRISES ACCESSOIRES DANS L'INDUSTRIE DE LA PÊCHE

(30) Priorität: 19.09.2017 DE 102017216608
(43) Veröffentlichungstag der Anmeldung: 12.08.2020
(73) Patentinhaber: thyssenkrupp Marine Systems GmbH, 24143 Kiel (DE)
(72) Erfinder: SCHIEMANN, Marc, 24145 Kiel (DE); ABILDGAARD, Max, 28205 Bremen (DE)
(74) Vertreter: thyssenkrupp Intellectual Property GmbH
(86) Internationale Anmeldenummer: PCT/EP2018/074484
(87) Internationale Veröffentlichungsnummer: WO 2019/057558

(56) Entgegenhaltungen:
- WO-A1-2017/123768
- WO-A1-2017/140096
- JP-A- 2014 190 787
- US-A1- 2015 183 498
- US-B1- 6 868 314

## Beschreibung

Die Erfindung betrifft ein Verfahren zur Verminderung von Beifang, bei dem ein autonomes Unterwasserfahrzeug zunächst einen potentiellen Fischschwarm betrachtet und den Anteil an Beifang abschätzt und so eine Entscheidung ermöglicht, den Fischschwarm zu fischen oder einen anderen lukrativeren Fischschwarm zu suchen.

Zu einer bestimmten Jahreszeit soll regelmäßig eine bestimmte Fischart gefischt werden, der Zielfisch. Andere Fischarten sind teilweise saisonal unverkäuflich, insgesamt unverkäuflich oder nur mit wirtschaftlichen Einbußen verkäuflich. Dieser Rest, welcher nicht aus Zielfisch besteht, wird Beifang genannt. Dieser Beifang muss vom Fischer jedoch heutzutage an Bord genommen und in den Hafen verbracht werden und reduziert somit die Menge der verkäuflichen Nutzlast. Zusätzlich zählt auch der Beifang gegen die Fischfangquote. Somit ist es für den Fischer nicht lukrativ, wenn der Beifang zu groß wird. Der Fischer hat somit das Bestreben, den Beifang zu minimieren.

Aus der US 2017 / 0105397 A1 ist eine Vorrichtung zur Überwachung des Fanges bekannt.

Nachteilig ist jedoch, dass diese während des Fanges erfolgt, der Fischer also nicht vorher weiß, ob die Arbeit des Fangens sich lohnt.

Aus der US 2015/0183498 A1 ist eine tauchbare Drone für Unterwassererkundung bekannt.

Aus der WO 2017/140096 A1 ist ein unbemanntes Wasserfahrzeug bekannt.

Aus der JP 2014-190787A ist eine Aussendung von Ultraschallwellen zur Fischdetektion bekannt.

Aus der US 6,868,314 B1 ist ein unbemanntes Flugobjekt bekannt.

Aus der WO 2017/123768 A1 ist ein Verfahren und eine Vorrichtung zur unbemannten luftbasierten Detektion von Objekten bekannt.

Aufgabe der Erfindung ist es, dem Fischer bereits vor Beginn des Fischfangs eine Entscheidungshilfe zu geben, ob das Fangen eines bestimmten Fischschwarms lukrativ ist oder alternativ welcher Fischschwarm unter mehreren der lukrativste ist.

Gelöst wird diese Aufgabe durch das Verfahren mit den in Anspruch 1 angegebenen Merkmalen

Vorteilhafte Weiterbildungen ergeben sich aus den Unteransprüchen, der nachfolgenden Beschreibung sowie den Zeichnungen.

Das erfindungsgemäße Verfahren zur Verminderung von Beifang wird mit einem System zum Fischfang durchgeführt, wobei das System wenigstens ein erstes Fischfangwasserfahrzeug und wenigstens ein erstes Fischbeobachtungswasserfahrzeug aufweist. Als Fischbeobachtungswasserfahrzeug wird ein autonomes Unterwasserfahrzeug ausgewählt. Das Verfahren zur Verminderung von Beifang umfasst die folgenden Schritte:
a) Vorgeben wenigstens einer ersten Fischart, welche gefischt werden soll,
b) Anfahren eines Fischereigebiets mit dem wenigstens einen ersten Fischfangwasserfahrzeug,
c) Erfassen wenigstens eines ersten Fischschwarms,
d) Aussetzen des ersten Fischbeobachtungswasserfahrzeuges vom ersten Fischfangwasserfahrzeug,
e) Durchfahren des ersten Fischschwarm durch das erste Fischbeobachtungswasserfahrzeug und dabei optisches Erfassen des ersten Fischschwarms,
f) Auswertung der optischen erfassten Daten bezüglich Fischart und Fischgröße,
g) Entscheiden, ob der erste Fischschwarm gefischt werden soll.

Der Fischfang erfolgt dann erst nach dem Schritt g), sofern im Schritt g) eine positive Entscheidung getroffen wurde.

Sind die Daten bezüglich Fischart und Fischgröße sowie die Größe des ersten Fischschwarms ermittelt, so kann gegebenenfalls die Berechnung der gesamten Biomasse des Zielfisches erfolgen. Zusätzlich kann optional auch die Berechnung der gesamten Biomasse des Beifangs ermittelt werden.

Fischfangwasserfahrzeuge im Sinne der Erfindung umfassen alle Formen der Wasserfahrzeuge, welche zum Fischfang geeignet sind. Dieses umfasst Anglerboote, insbesondere bei kommerziell angebotenen Angeltouren, über Trawler bis zu Fabrikschiffen, auf welchen der gefangene Fisch bereits zu Produkten weiterverarbeitet wird.

Ein autonomes Unterwasserfahrzeug kann beispielsweise im Falle der Überwasserfahrt auch ferngesteuert betrieben werden. Notwendig ist die autonome Arbeitsweise, wenn eine Kommunikation nicht möglich, nicht mit ausreichender Datenübertragungsrate möglich oder gewünscht ist, beispielsweise bei Unterwasserfahrt.

Vorteil des erfindungsgemäßen Verfahrens ist es, dass der Fischer schnell und ohne bereits mit dem Vorgang des Fischens zu beginnen eine Information über Beifang erhält und somit eine Entscheidung treffen kann. Hierdurch werden sowohl die wirtschaftlichen Möglichkeiten des Fischers verbessert und gleichzeitig die Umwelt geschützt.

Besonders bevorzugt erfolgt das Erfassen des wenigstens einen ersten Fischschwarms mittels eines auf dem ersten Fischfangwasserfahrzeug angeordneten Sonars. Alternativ oder zusätzlich kann das Erfassen mittels traditioneller Methoden, beispielsweise Beobachtung der Raubtiere wie Möwen, Wale oder Raubfische, erfolgen.

Die Auswertung der optischen erfassten Daten bezüglich Fischart und Fischgröße in Schritt f) erfolgt beispielsweise und bevorzugt mittels eines optischen Abgleichs mit Referenzbildern. Beispielsweise kann der optische Abgleich in einem neuronalen Netz erfolgen.

Die Entscheidung in Schritt g), ob der erste Fischschwarm gefischt werden soll oder nicht, erfolgt beispielsweise und bevorzugt dadurch, dass wenigstens ein vorgegebener Anteil, beispielsweise 70 % zur in Schritt a) vorgegebenen ersten Fischart gehören.

In einer weiteren Ausführungsform der Erfindung weist das Verfahren zusätzlich den folgenden Schritt auf:
h) Anfahren des ersten Fischschwarms durch das erste Fischbeobachtungswasserfahrzeug, wobei Schritt h) zwischen Schritt d) und Schritt e) erfolgt.

Zwar kann das wenigstens eine erste Fischfangwasserfahrzeug auch zunächst den ersten Fischschwarm selber anfahren und direkt über dem ersten Fischschwarm das erste Fischbeobachtungswasserfahrzeug aussetzen.

In einer weiteren Ausführungsform der Erfindung wird in Schritt c) wenigstens ein zweiter Fischschwarm mittels eines auf dem ersten Fischfangwasserfahrzeug angeordneten Sonars erfasst. In Schritt d) wird ein zweites Fischbeobachtungswasserfahrzeug vom ersten Fischfangwasserfahrzeug ausgesetzt. In Schritt h) fährt das zweite Fischbeobachtungswasserfahrzeug den zweiten Fischschwarm an. In Schritt e) durchfährt das zweite Fischbeobachtungswasserfahrzeug den zweiten Fischschwarm und erfasst dabei den zweiten Fischschwarm optisch.

Diese Ausführungsform ist besonders bevorzugt um durch die Parallelisierung dem Fischer schnell die Entscheidung zwischen zwei Alternativen zu ermöglichen. Da auf dem Sonar die in einem Fischschwarm vorherrschende Fischart nur schwer abschätzbar ist, kann auf diese Weise eine schnelle Entscheidung getroffen werden.

In einer weiteren Ausführungsform der Erfindung erfolgt das Anfahren in Schritt h) an der Wasseroberfläche.

In einer weiteren Ausführungsform der Erfindung besteht während des Anfahrens in Schritt h) eine Kommunikationsverbindung zwischen dem wenigstens einen ersten Fischfangwasserfahrzeug und dem wenigstens einen ersten Fischbeobachtungswasserfahrzeug. Diese Ausführungsform der Erfindung ermöglicht die Verwendung von Fischbeobachtungswasserfahrzeugen ohne Sonar. An der Wasseroberfläche kann das Fischbeobachtungswasserfahrzeug beispielsweise mittels Funk durch das Fischfangwasserfahrzeug geführt werden. Dieses ist gegenüber einer vorprogrammierten Route vorteilhaft, um schnell und effizient auf Veränderungen des Fischschwarms eingehen zu können.

In einer weiteren Ausführungsform der Erfindung fährt das wenigstens eine erste Fischbeobachtungswasserfahrzeug in Schritt h) den ersten Fischwarm mittels eines Aktivsonars an.

In einer weiteren Ausführungsform der Erfindung fährt das wenigstens eine erste Fischbeobachtungswasserfahrzeug in Schritt h) den ersten Fischwarm mittels eines Passivsonars an, wobei das wenigstens eine erste Fischfangwasserfahrzeug aktiv Sonarimpulse emittiert und das wenigstens eine erste Fischbeobachtungswasserfahrzeug die vom ersten Fischschwarm reflektierten Sonarimpulse detektiert. In dieser Ausführungsform wird der Energiebedarf für das Sonar an Bord des Fischbeobachtungswasserfahrzeugs reduziert, welches gegenüber dem Fischfangwasserfahrzeug einen deutlich reduzierten Energievorrat aufweist.

In einer weiteren Ausführungsform der Erfindung wird in Schritt a) zusätzlich wenigstens eine zweite Fischart vorgegeben, welche nicht gefischt werden soll. Beispielsweise wird zu einem gewissen Zeitpunkt A vorgegeben, dass Hering gefischt und Makrele vermieden werden soll, zu einem anderen Zeitpunkt B wird vorgegeben, dass Hering vermieden und Makrele gefischt werden soll. Dieses kann sich beispielsweise aus den aktuellen Marktpreisen, durch die aktuelle Fangsaison, die Fischereiquote aber auch aus Schutzvorschriften ergeben. Diese Ausführungsform ermöglicht eine Klassifikation zwischen noch tolerierbaren und zu vermeidendem Beifang. Ein Fischschwarm mit mehr Beifang, welcher aber aus gewissen Gründen für den Fischer weniger schädlich ist, kann daher vorteilhaft gegenüber einem Fischschwarm mit weniger Beifang, wobei der Beifang aber aus zu vermeidenden Fischen besteht. Dieses ist beispielsweise bei gesetzlichen Schutzvorschriften für bestimmte Arten sinnvoll.

In einer weiteren Ausführungsform der Erfindung wird in Schritt a) zusätzlich wenigstens eine erste Fischgröße vorgegeben, wobei die erste Fischgröße als Mindestfanggröße vorgegeben wird.

In einer weiteren Ausführungsform der Erfindung werden in der Auswertung der optisch erfassten Daten auch Indikatoren zum Gesundheitszustand, beispielsweise die Magerkeit oder Fettheit der Fische, berechnet. Diese Indikatoren können zur Entscheidung beitragen, ob gefischt oder nicht gefischt werden soll.

In einer weiteren Ausführungsform der Erfindung wird Schritt c) die Größe des wenigstens einen ersten Fischschwarms mittels Sonar ermittelt. Aus der in Schritt c) ermittelten Größe des wenigstens einen ersten Fischschwarms wird die optimale Route für das Erreichen und/oder das Durchfahren des wenigstens einen ersten Fischschwarms in Schritt e) ermittelt.

In einer weiteren Ausführungsform der Erfindung fährt in Schritt e) das wenigstens eine erste Fischbeobachtungswasserfahrzeug beim Durchfahren des ersten Fischschwarms so lange gerade aus, bis optisch durch Abnahme der Fischdichte das Erreichen des Äußeren des Fischschwarms erkannt wird. Dann ändert das wenigstens eine erste Fischbeobachtungswasserfahrzeug seine Richtung in den Fischschwarm zurück.

In einer weiteren Ausführungsform der Erfindung schätzt in Schritt e) das wenigstens eine erste Fischbeobachtungswasserfahrzeug beim Durchfahren des ersten Fischschwarms aus der beobachteten Fischdichte und Bewegung einen Schwerpunkt des Fischschwarms ab. Dabei berechnet das wenigstens eine erste Fischbeobachtungswasserfahrzeug seine Bewegung relativ zum Schwerpunkt des Fischschwarms. Das wenigstens eine erste Fischbeobachtungswasserfahrzeug kann damit relativ zum Schwerpunkt des Fischschwarms navigieren um dem Schwarm zu verfolgen oder um im Schwarm zu verbleiben.

In einer weiteren Ausführungsform der Erfindung erfolgt in Schritt e) die optische Erfassung mittels wenigstens einer ersten Kamera.

In einer weiteren Ausführungsform der Erfindung weist das wenigstens eine erste Fischbeobachtungswasserfahrzeug wenigstens eine erste Projektionsvorrichtung auf und projiziert damit wenigstens zwei parallele Linien. Die zwei parallelen Linien werden dann von den Fischen reflektiert, auf welche die Projektion trifft. Aus dem bekannten Abstand der Linien kann dann die Fischgröße einfach ermittelt werden.

In einer weiteren Ausführungsform der Erfindung weisen die wenigstens zwei parallelen Linien einen konstanten, von der Entfernung zum wenigstens einen ersten Fischbeobachtungswasserfahrzeug unabhängigen Abstand auf. Beispielsweise und bevorzugt handelt es sich um eine Laserprojektion.

In einer weiteren Ausführungsform der Erfindung erfolgt die Auswertung der optischen erfassten Daten bezüglich Fischart und Fischgröße in Schritt f) im wenigstens einen ersten Fischbeobachtungswasserfahrzeug. Optional kann das Ergebnis der Auswertung über ein akustisches Modem oder über Funk, bevorzugt über ein akustisches Modem, an das Fischfangwasserfahrzeug übermittelt werden. Alternativ kann das Fischbeobachtungswasserfahrzeug in einer ersten Ausführungsform die erfassten Rohdaten an das Fischfangwasserfahrzeug zur Auswertung übermitteln. Dieses kann entweder über ein akustisches Modem, über Funk oder nach der Wiederaufnahme des Fischbeobachtungswasserfahrzeugs durch das Fischfangwasserfahrzeug erfolgen. Weiter alternativ kann das Fischbeobachtungswasserfahrzeug in einer weiteren Ausführungsform die erfassten Rohdaten per Funk oder Satellitenkommunikation ein eine zentrale Auswertestelle, beispielsweise ein landgestütztes Rechenzentrum, zur Auswertung übertragen.

In einer weiteren Ausführungsform der Erfindung erfolgt das Entscheiden in Schritt g), ob der erste Fischschwarm gefischt werden soll, im wenigstens einen ersten Fischbeobachtungswasserfahrzeug.

Erfolgt die Auswertung der optischen erfassten Daten bezüglich Fischart und Fischgröße in Schritt f) auf dem Fischfangwasserfahrzeug, so erfolgt auch das Entscheiden in Schritt g), ob der erste Fischschwarm gefischt werden soll, vorzugsweise im Fischfangwasserfahrzeug.

Erfolgt die Auswertung der optischen erfassten Daten bezüglich Fischart und Fischgröße in Schritt f) im Fischbeobachtungswasserfahrzeug, so kann das das Entscheiden in Schritt g), ob der erste Fischschwarm gefischt werden soll, in einer ersten Alternative im Fischbeobachtungswasserfahrzeug erfolgen. Diese ist bevorzugt, wenn es sich um vergleichsweise übliche Fischarten handelt, die automatisch leicht unterscheidbar sind. In einer zweiten Alternative erfolgt das das Entscheiden in Schritt g), ob der erste Fischschwarm gefischt werden soll, auf dem Fischfangwasserfahrzeug. Dieses ist bevorzugt, wenn die zu fischenden Fischarten sich nicht gut automatisch erkennen lassen oder die Auswertung nach der erste Alternative zu keinem eindeutigen Ergebnis gekommen ist.

In einer weiteren Ausführungsform der Erfindung wird die Entscheidung vom wenigstens einen ersten Fischbeobachtungswasserfahrzeug an der Wasseroberfläche per Funk an das wenigstens eine erste Fischfangwasserfahrzeug oder mittels der durch das Sonar des wenigstens einen ersten Fischfangwasserfahrzeug beobachtbaren Bewegung des wenigstens einen ersten Fischbeobachtungswasserfahrzeug übermittelt. Die Übertragung per Funk ist bei oberflächennahen Fischschwärmen bevorzugt. Insbesondere können hierbei weitere Informationen, beispielsweise Dokumentationen mit übertragen werden. Eine Übertragung per Bewegung analog der Kommunikation von Bienen in einem Bienenstock ist beispielsweise bei einem Fischschwarm in großer Tiefe vorteilhaft. Über Sonar kann die Bewegung gut und auch über größere Entfernung sicher erfasst werden. Die Zeit für ein Auftauchen und ein Übertragen entfällt, somit kann insgesamt Zeit eingespart werden.

In einer weiteren Ausführungsform der Erfindung misst das wenigstens eine erste Fischbeobachtungswasserfahrzeug zusätzlich Temperatur, Salzgehalt, CO₂-Gehalt, O₂-Gehalt, Phosphat-Konzentration, Nitrat-Konzentration, Leitfähigkeit, Druck und/oder Planktonkonzentration.

Natürlich ist das Verfahren auch mit einer sehr großen Anzahl an Fischfangwasserfahrzeugen und Fischbeobachtungswasserfahrzeugen denkbar, insbesondere einer ganzen Fischfangflotte. In dieser Ausführungsform suchen die Fischbeobachtungswasserfahrzeugen vollständig autark nach interessanten Fischschwärmen und melden diese entweder an eine Zentralstelle oder per Funk an das nächst gelegene Fischfangwasserfahrzeug. In dieser Ausführungsform ist eine möglichst große Standzeit auf See der Fischbeobachtungswasserfahrzeuge essentiell, die Größe der Fischbeobachtungswasserfahrzeuge hingegen vernachlässigbar.

In einer weiteren Ausführungsform der Erfindung wird in Schritt e) das wenigstens eine erste Fischbeobachtungswasserfahrzeug während des Durchfahrens des ersten Fischschwarms wenigstens für ein erstes Zeitintervall antriebslos treibt. Durch das antriebslose Treiben ist die Bewegung des Fischbeobachtungswasserfahrzeugs weniger fischähnlich, wodurch der Fluchtreflex der Fische unterdrückt wird. Hierdurch kann das Fischbeobachtungswasserfahrzeug näher an die Fische heran, wodurch eine bessere optische Erfassung möglich ist.

In einer weiteren Ausführungsform der Erfindung wird in Schritt e) das wenigstens eine erste Fischbeobachtungswasserfahrzeug während des Durchfahrens des ersten Fischschwarms intervallweise antriebslos treibt. Bevorzugter Weise wird der Antrieb des Fischbeobachtungswasserfahrzeugs immer nur kurzfristig zur Beschleunigung zur Überwindung der Reibungsverluste und/oder Kurskorrekturen aktiviert. Somit besteht das Durchfahren aus ersten Zeitintervallen, in welchen das Fischbeobachtungswasserfahrzeugs antriebslos treibt und aus zweiten Zeitintervallen, in welchen das Fischbeobachtungswasserfahrzeug aktiv angetrieben wird.

Es wird weiterhin ein Fischbeobachtungswasserfahrzeug zur Durchführung des erfindungsgemäßen Verfahrens zur Verminderung von Beifang beschrieben.

Insbesondere ist das Fischbeobachtungswasserfahrzeug manuell aussetzbar und einholbar. Dieses ist vorteilhaft, da das Fischbeobachtungswasserfahrzeug somit von jedem beliebigen Fischfangwasserfahrzeug eingesetzt werden kann.

Insbesondere weist das Fischbeobachtungswasserfahrzeug ein Gewicht von höchstens 25 kg, bevorzugt von höchstens 15 kg, weiter bevorzugt von höchstens 8 kg, am bevorzugtesten ein Gewicht von höchstens 5 kg aus. 25 kg stellen die Grenze dar, welche aus gesetzlichen Gründen durch eine Person zu tragen sind. Je leichter das Fischbeobachtungswasserfahrzeug ist, desto leichter ist dieses für eine Person in das Wasser zu verbringen und wieder an Bord zu holen. Auf der anderen Seite ist für Reichweite und Ausdauer es vorteilhaft, wenn das Fischbeobachtungswasserfahrzeug so groß wie möglich ist.

Insbesondere ist das Fischbeobachtungswasserfahrzeug bis wenigstens 200 m, bevorzugt bis wenigstens 600 m, besonders bevorzugt bis wenigstens 1000 m Tauchtiefe einsetzbar.

Insbesondere weist das Fischbeobachtungswasserfahrzeug wenigstens eine erste Kamera zur optischen Erfassung, wenigstens eine erste Projektionsvorrichtung, wenigstens eine erste Datenspeichervorrichtung, wenigstens eine erste Datenverarbeitungsvorrichtung und wenigstens eine Drahtloskommunikationsschnittstelle auf.

Insbesondere weist das Fischbeobachtungswasserfahrzeug wenigstens eine Stereokamera auf.

Insbesondere weist das Fischbeobachtungswasserfahrzeug wenigstens eine erste Kamera und wenigstens eine zweite Kamera auf, wobei die wenigstens eine erste Kamera in Längsrichtung des Fischbeobachtungswasserfahrzeugs montiert ist. Die wenigstens eine zweite Kamera ist quer zur Fahrtrichtung montiert ist. Vorteil der wenigstens einen zweiten Kamera ist die optische Erfassung, wenn das Fischbeobachtungswasserfahrzeug parallel zum Fischschwarm fährt. Besonders bevorzugt ist die wenigsten eine zweite Kamera, welche quer zur Längsrichtung des Fischbeobachtungswasserfahrzeugs.

Insbesondere erfolgt die Beleuchtung des Fischschwarms mittels lichtemittierender Dioden (LEDs). Hierbei kann sichtbares und oder infrarotes Licht verwendet werden. Besonders bevorzugt wird infrarotes Licht verwendet, da dieses die Fische nicht irritiert.

Insbesondere weist das Fischbeobachtungswasserfahrzeug wenigstens eine erste Lichtquelle auf.

Insbesondere ist die wenigstens eine erste Lichtquelle beanstandet zur wenigstens einen ersten Kamera angeordnet.

Insbesondere weist das Fischbeobachtungswasserfahrzeug wenigstens eine zweite Lichtquelle auf.

Insbesondere ist die wenigstens eine zweite Lichtquelle beanstandet zur wenigstens einen zweiten Kamera angeordnet.

Insbesondere weist das Fischbeobachtungswasserfahrzeug eine erste zweite Lichtquelle und eine zweite zweite Lichtquelle auf, wobei die erste zweite Lichtquelle und die zweite zweite Lichtquelle beanstandet zur wenigstens einen zweiten Kamera angeordnet sind. Je weiter die zweiten Lichtquellen von der wenigstens einen zweiten Kamera beabstandet sind, umso geringer sind Streueffekt an Schwebeteilchen, direkte Reflexionen an der Fischoberfläche und andere negative optische Effekte und so einfacher sind die erfassten Daten auswertbar.

Insbesondere sind die erste zweite Lichtquelle und die zweite zweite Lichtquelle auf einer ersten Schiene montiert und auf der Schiene verfahrbar. Besonders bevorzugt werden die erste zweite Lichtquelle und die zweite zweite Lichtquelle jeweils so verfahren, dass der Abstand zwischen der ersten zweiten Lichtquelle und der zweiten Kamera und der Abstand zwischen der zweiten zweiten Lichtquelle und der zweiten Kamera gleich groß sind.

Insbesondere weist das Fischbeobachtungswasserfahrzeug wenigstens einen Temperatursensor, einen Salzgehaltsensor und/oder einen Planktongehaltsensor auf.

Insbesondere weist das Fischbeobachtungswasserfahrzeug wenigstens drei Propeller auf. Durch die Verwendung von wenigstens drei Propellern kann das Fischbeobachtungswasserfahrzeug ohne weitere Hilfsmittel seine Richtung ändern. Bevorzugt weist das Fischbeobachtungswasserfahrzeug vier Propeller auf. Dieses erleichtert die Regelung bei Richtungsänderungen.

Nachfolgend ist das erfindungsgemäße Verfahren anhand eines in den Zeichnungen dargestellten Ausführungsbeispiels näher erläutert.
Fig. 1 Flussdiagramm
Fig. 2 Fischfangwasserfahrzeug mit zwei Fischschwärmen
Fig. 3 beispielhaftes Fischbeobachtungswasserfahrzeug
Fig. 4 beispielhaftes Fischbeobachtungswasserfahrzeug

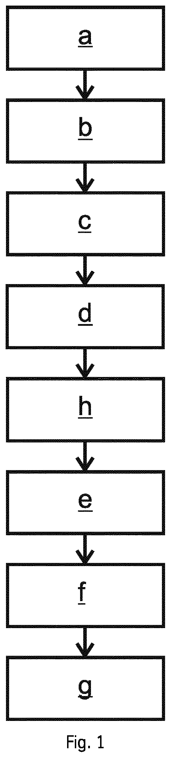

In Fig. 1 ist das Verfahren in einem Flussdiagramm gezeigt. In Schritt a) werden Fischarten vorgegeben, welche gefangen werden soll. Weiter wird deren Mindestgröße vorgegeben. Zusätzlich werden weiter Fischarten vorgegeben, deren Fang vermieden werden soll. In Schritt b) fährt ein Fischfangwasserfahrzeug 10 ein Gebiet an, in welchem Fischschwärme 30, 31 der gewünschten Fischarten vermutet werden. In Schritt c) erfasst das Fischfangwasserfahrzeug 10 Fischschwärme 30, 31 mittels Sonar. In Schritt d) wird ein Fischbeobachtungswasserfahrzeug 20, 21 ausgesetzt, welches in Schritt h) einen Fischschwarm 30, 31 anfährt. In Schritt e) durchfährt das Fischbeobachtungswasserfahrzeug 20, 21 den Fischschwarm 30, 31 und erfasst diesen dabei optisch. In Schritt f) werden die optisch erfassten Daten ausgewertet und in Schritt g) eine Entscheidung getroffen, ob dieser Fischschwarm 30, 31 befischt werden soll.

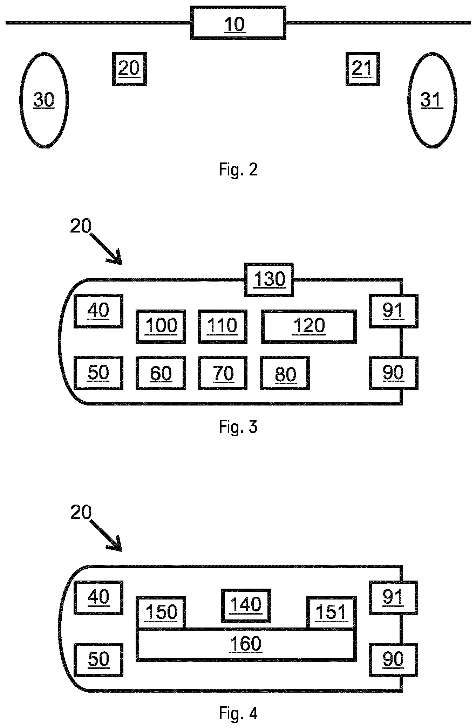

Fig. 2 zeigt ein typisches Szenario. Ein Fischfangwasserfahrzeug 10 ortet zwei potentiell interessante Fischschwärme 30, 31. Um sich zu entscheiden wird ein erstes Fischbeobachtungswasserfahrzeug 20 zur Untersuchung des ersten Fischschwarms 30 und ein zweites Fischbeobachtungswasserfahrzeug 21 zur Untersuchung des zweiten Fischschwarms 31 eingesetzt.

In Fig. 3 ist ein erstes beispielhaftes Fischbeobachtungswasserfahrzeug 20 schematisch dargestellt. Das erste Fischbeobachtungswasserfahrzeug 20 weist eine erste Kamera 40 zur optischen Erfassung auf. Ferner ist ein Sonarmodul 50 integriert, wobei das Sonarmodul 50 für den aktiven und/oder passiven Betrieb ausgebildet sein kann. Weiter weist das erste Fischbeobachtungswasserfahrzeug 20 einen Temperatursensor 60, einen Salzgehaltsensor 70 und einen Planktongehaltsensor 80 auf. Um die erfassten Daten zu verarbeiten weist das erste Fischbeobachtungswasserfahrzeug 20 eine Datenverarbeitungsvorrichtung 100 und eine Datenspeichervorrichtung 110 auf. Angetrieben wird das erste Fischbeobachtungswasserfahrzeug 20 mit einem ersten Antrieb 90 und einem zweiten Antrieb 91 sowie einem nicht gezeigten dritten Antrieb, der hinter dem ersten Antrieb 90 angeordnet ist, und einem nicht gezeigten vierten Antrieb, der hinter dem zweiten Antrieb 91 angeordnet ist. Als Energieversorgung 120 kann vorzugsweise ein Sekundärelement, beispielsweise ein Lithium-Ionen-Akkumulator, oder eine Brennstoffzelle eingesetzt werden. Zur Datenübertragung weist das erste Fischbeobachtungswasserfahrzeug 20 eine Kommunikationsschnittstelle 130 auf.

In Fig. 4 ist zweites beispielhaftes Fischbeobachtungswasserfahrzeug 20 gezeigt, wobei das zweite beispielhaftes Fischbeobachtungswasserfahrzeug 20 auch alle in Fig. 3 gezeigten Merkmale des ersten beispielhaften Fischbeobachtungswasserfahrzeugs 20 zusätzlich aufweisen kann. Das zweite beispielhafte Fischbeobachtungswasserfahrzeug 20 weist eine zweite Kamera 140 sowie eine erste zweite Lichtquelle 150 und eine zweite zweite Lichtquelle 151 auf. Die erste zweite Lichtquelle 150 und die zweite zweite Lichtquelle 151 sind auf einer ersten Schiene 150 bewegbar angeordnet. Der Abstand zwischen der ersten zweiten Lichtquelle 150 und der zweiten Kamera 140 ist gleich dem Abstand zwischen der zweiten zweiten Lichtquelle 151 und der zweiten Kamera 140.

Bezugszeichen
- 10: Fischfangwasserfahrzeug
- 20: erstes Fischbeobachtungswasserfahrzeug
- 21: zweites Fischbeobachtungswasserfahrzeug
- 30: erster Fischschwarm
- 31: zweiter Fischschwarm
- 40: erste Kamera
- 50: Sonarmodul
- 60: Temperatursensor
- 70: Salzgehaltsensor
- 80: Planktongehaltsensor
- 90: erster Antrieb
- 91: zweiter Antrieb
- 100: Datenverarbeitungsvorrichtung
- 110: Datenspeichervorrichtung
- 120: Energieversorgung
- 130: Kommunikationsschnittstelle
- 140: zweite Kamera
- 150: erste zweite Lichtquelle
- 151: zweite zweite Lichtquelle
- 160: erste Schiene

## Patentansprüche

1. Verfahren zur Verminderung von Beifang, wobei das Verfahren mit einem System zum Fischfang durchgeführt wird, wobei das System wenigstens ein erstes Fischfangwasserfahrzeug (10) und wenigstens ein erstes Fischbeobachtungswasserfahrzeug (20) aufweist, wobei als Fischbeobachtungswasserfahrzeug ein autonomes Unterwasserfahrzeug ausgewählt wird, wobei das Verfahren die folgenden Schritte umfasst:
a) Vorgeben wenigstens einer ersten Fischart, welche gefischt werden soll,
b) Anfahren eines Fischereigebiets mit dem wenigstens einen ersten Fischfangwasserfahrzeug (10),
c) Erfassen wenigstens eines ersten Fischschwarms (30),
d) Aussetzen des ersten Fischbeobachtungswasserfahrzeuges vom ersten Fischfangwasserfahrzeug (10),
e) Durchfahren des ersten Fischschwarms (30) durch das erste Fischbeobachtungswasserfahrzeug und dabei optisches Erfassen des ersten Fischschwarms (30),
f) Auswertung der optischen erfassten Daten bezüglich Fischart und Fischgröße,
g) Entscheiden, ob der erste Fischschwarm (30) gefischt werden soll.

2. Verfahren zur Verminderung von Beifang nach Anspruch 1, **dadurch gekennzeichnet, dass** in Schritt c) das Erfassen des wenigstens einen ersten Fischschwarms mittels eines auf dem ersten Fischfangwasserfahrzeug angeordneten Sonars erfolgt.

3. Verfahren zur Verminderung von Beifang nach Anspruch 1 oder Anspruch 2, **dadurch gekennzeichnet, dass** das Verfahren zusätzlich den folgenden Schritt aufweist:
h) Anfahren des ersten Fischschwarms (30) durch das erste Fischbeobachtungswasserfahrzeug,
wobei Schritt h) zwischen Schritt d) und Schritt e) erfolgt.

4. Verfahren zur Verminderung von Beifang nach Anspruch 3, **dadurch gekennzeichnet, dass** in Schritt c) wenigstens eines zweiter Fischschwarms (31) mittels eines auf dem ersten Fischfangwasserfahrzeug (10) angeordneten Sonars erfasst wird, wobei in Schritt d) ein zweites Fischbeobachtungswasserfahrzeug (21) vom ersten Fischfangwasserfahrzeug (10) ausgesetzt wird, wobei in Schritt h) das zweite Fischbeobachtungswasserfahrzeug (21) den zweiten Fischschwarm (31) anfährt, wobei in Schritt e) das zweite Fischbeobachtungswasserfahrzeug (21) den zweiten Fischschwarm (31) durchfährt und dabei den zweiten Fischschwarm (31) optisch erfasst.

5. Verfahren zur Verminderung von Beifang nach einem der Ansprüche 3 bis 4, **dadurch gekennzeichnet, dass** das wenigstens eine erste Fischbeobachtungswasserfahrzeug (20) in Schritt h) den ersten Fischwarm mittels eines Aktivsonars anfährt.

6. Verfahren zur Verminderung von Beifang nach einem der Ansprüche 3 bis 5, **dadurch gekennzeichnet, dass** das wenigstens eine erste Fischbeobachtungswasserfahrzeug (20) in Schritt h) den ersten Fischwarm mittels eines Passivsonars anfährt, wobei das wenigstens eine erste Fischfangwasserfahrzeug (10) aktiv Sonarimpulse emittiert und das wenigstens eine erste Fischbeobachtungswasserfahrzeug (20) die vom ersten Fischschwarm (30) reflektierten Sonarimpulse detektiert.

7. Verfahren zur Verminderung von Beifang nach einem der vorstehenden Ansprüche, **dadurch gekennzeichnet, dass** in Schritt a) zusätzlich wenigstens eine zweite Fischart vorgegeben wird, welche nicht gefischt werden soll.

8. Verfahren zur Verminderung von Beifang nach einem der vorstehenden Ansprüche, **dadurch gekennzeichnet, dass** in Schritt a) zusätzlich wenigstens eine erste Fischgröße vorgegeben wird, wobei die erste Fischgröße als Mindestfanggröße vorgegeben wird.

9. Verfahren zur Verminderung von Beifang nach einem der vorstehenden Ansprüche, **dadurch gekennzeichnet, dass** in Schritt e) das wenigstens eine erste Fischbeobachtungswasserfahrzeug (20) beim Durchfahren des ersten Fischschwarms (30) so lange gerade aus fährt, bis optisch durch Abnahme der Fischdichte das Erreichen des Äußeren des Fischschwarms (30) erkannt wird und dann das wenigstens eine erste Fischbeobachtungswasserfahrzeug (20) seine Richtung in den Fischschwarm (30) zurück ändert.

10. Verfahren zur Verminderung von Beifang nach einem der Ansprüche 1 bis 8, **dadurch gekennzeichnet, dass** in Schritt e) das wenigstens eine erste Fischbeobachtungswasserfahrzeug (20) beim Durchfahren des ersten Fischschwarms (30) aus der beobachteten Fischdichte und Bewegung einen Schwerpunkt des Fischschwarms (30) abschätzt und wobei das wenigstens eine erste Fischbeobachtungswasserfahrzeug (20) seine Bewegung relativ zum Schwerpunkt des Fischschwarms (30) berechnet.

11. Verfahren zur Verminderung von Beifang nach einem der vorstehenden Ansprüche, **dadurch gekennzeichnet, dass** in Schritt e) die optische Erfassung mittels wenigstens einer ersten Kamera (40) erfolgt, wobei wenigstens eine erste Fischbeobachtungswasserfahrzeug (20) wenigstens eine erste Projektionsvorrichtung aufweist und damit wenigstens zwei parallele Linien projiziert, wobei die wenigstens zwei parallelen Linien einen konstanten, von der Entfernung zum wenigstens eine erste Fischbeobachtungswasserfahrzeug (20) unabhängigen Abstand aufweisen.

12. Verfahren zur Verminderung von Beifang nach einem der vorstehenden Ansprüche, **dadurch gekennzeichnet, dass** das wenigstens eine erste Fischbeobachtungswasserfahrzeug (20) zusätzlich Temperatur, Salzgehalt, CO₂-Gehalt, O₂-Gehalt, Phosphat-Konzentration, Nitrat-Konzentration, Leitfähigkeit, Druck und/oder Planktonkonzentration misst.

13. Verfahren zur Verminderung von Beifang nach einem der vorstehenden Ansprüche, **dadurch gekennzeichnet, dass** das wenigstens eine erste Fischbeobachtungswasserfahrzeug (20, 21) während des Durchfahrens des ersten Fischschwarms (30) in Schritt e) wenigstens für ein erstes Zeitintervall antriebslos treibt, wobei das wenigstens eine erste Fischbeobachtungswasserfahrzeug (20, 21) während des Durchfahrens des ersten Fischschwarms (30) in Schritt e) intervallweise antriebslos treibt

## Claims

1. Method for reducing bycatch, the method being carried out by means of a system for catching fish, wherein the system includes at least one first fish-catching watercraft (10) and at least one first fish-observing watercraft (20), with an autonomous underwater craft being chosen as the fish-observing watercraft, wherein the method comprises the following steps:
a) specifying at least one first type of fish, which is to be fished,
b) approaching a fishing area with the at least one first fish-catching watercraft (10),
c) sensing at least one first school of fish (30),
d) launching the first fish-observing watercraft from the first fish-catching watercraft (10),
e) passing through the first school of fish (30) with the first fish-observing watercraft and thereby optically sensing the first school of fish (30),
f) evaluating the optically sensed data with respect to fish type and fish size,
g) deciding whether the first school of fish (30) is to be fished.

2. Method for reducing bycatch according to Claim 1, **characterized in that**, in step c), the sensing of the at least one first school of fish takes place by means of a sonar arranged on the first fish-catching watercraft.

3. Method for reducing bycatch according to Claim 1 or Claim 2, **characterized in that** the method additionally has the following step:
h) approaching the first school of fish (30) by the first fish-observing watercraft,
step h) being performed between step d) and step e).

4. Method for reducing bycatch according to Claim 3, **characterized in that**, in step c), at least one second school of fish (31) is sensed by means of a sonar arranged on the first fish-catching watercraft (10), wherein, in step d), a second fish-observing watercraft (21) is launched from the first fish-catching watercraft (10), wherein, in step h), the second fish-observing watercraft (21) approaches the second school of fish (31), wherein, in step e), the second fish-observing watercraft (21) passes through the second school of fish (31) and thereby optically senses the second school of fish (31).

5. Method for avoiding bycatch according to either of Claims 3 and 4, **characterized in that**, in step h), the at least one fish-observing watercraft (20) approaches the first school of fish by means of an active sonar.

6. Method for reducing bycatch according to one of Claims 3 to 5, **characterized in that**, in step h), the at least one first fish-observing watercraft (20) approaches the first school of fish by means of a passive sonar, the at least one first fish-catching watercraft (10) actively emitting sonar pulses and the at least one first fish-observing watercraft (20) detecting the sonar pulses reflected from the first school of fish (30).

7. Method for reducing bycatch according to one of the preceding claims, **characterized in that**, in step a), at least one second type of fish, which is not to be fished, is additionally specified.

8. Method for reducing bycatch according to one of the preceding claims, **characterized in that**, in step a), at least one first size of fish is additionally specified, the first size of fish being specified as the minimum catch size.

9. Method for reducing bycatch according to one of the preceding claims, **characterized in that**, in step e), when passing through the first school of fish (30), the at least one first fish-observing watercraft (20) travels straight ahead until the outer reaches of the school of fish (30) are optically detected by a reduction in the density of fish and then the at least one first fish-observing watercraft (20) changes its direction back into the school of fish (30) .

10. Method for reducing bycatch according to one of Claims 1 to 8, **characterized in that**, in step e), when passing through the first school of fish (30), the at least one first fish-observing watercraft (20) estimates from the observed density of fish and their movement a centre of the school of fish (30) and wherein the at least one first fish-observing watercraft (20) calculates its movement in relation to the centre of the school of fish (30).

11. Method for reducing bycatch according to one of the preceding claims, **characterized in that**, in step e), the optical sensing is performed by means of at least one first camera (40), wherein at least one first fish-observing watercraft (20) has at least one first projection device, and with it projects at least two parallel lines, the at least two parallel lines being at a constant distance independent of the distance from the at least one first fish-observing watercraft (20) .

12. Method for reducing bycatch according to one of the preceding claims, **characterized in that** the at least one first fish-observing watercraft (20) additionally measures temperature, salt content, CO₂ content, O₂ content, phosphate concentration, nitrate concentration, conductivity, pressure and/or plankton concentration.

13. Method for reducing bycatch according to one of the preceding claims, **characterized in that**, while passing through the first school of fish (30) in step e), at least for a first time interval the at least one first fish-observing watercraft (20, 21) drifts, the at least one first fish-observing watercraft (20, 21) drifting at intervals while passing through the first school of fish (30) in step e).

## Revendications

1. Procédé de réduction de prises accessoires, dans lequel le procédé est exécuté par un système de pêche, le système présentant au moins un premier navire de pêche (10) et au moins un premier navire d'observation de poissons (20), un sous-marin autonome étant retenu comme navire d'observation de poissons, le procédé comprenant les étapes suivantes consistant à :
a) spécifier au moins un premier type de poisson à pêcher,
b) aborder une zone de pêche par ledit au moins un premier navire de pêche (10),
c) détecter au moins un premier banc de poissons (30),
d) débarquer le premier navire d'observation de poissons du premier navire de pêche (10),
e) traverser le premier banc de poissons (30) avec le premier navire d'observation de poissons tout en détectant optiquement le premier banc de poissons (30),
f) évaluer les données détectées optiques quant à un type de poisson et une taille de poisson,
g) décider si le premier banc de poissons (30) est à pêcher.

2. Procédé de réduction de prises accessoires selon la revendication 1, **caractérisé en ce qu'**à l'étape c), la détection de l'au moins un premier banc de poissons est effectuée au moyen d'un sonar disposé sur le premier navire de pêche.

3. Procédé de réduction de prises accessoires selon la revendication 1 ou 2, **caractérisé en ce que** le procédé présente en outre l'étape suivante consistant à :
h) aborder le premier banc de poissons (30) par le premier navire d'observation de poissons,
l'étape h) étant effectuée entre l'étape d) et l'étape e).

4. Procédé de réduction de prises accessoires selon la revendication 3, **caractérisé en ce que** à l'étape c), au moins un deuxième banc de poissons (31) est détecté au moyen d'un sonar disposé sur le premier navire de pêche (10), dans lequel à l'étape d), un deuxième navire d'observation de poissons (21) est débarqué du premier navire de pêche (10), dans lequel à l'étape h), le deuxième navire d'observation de poissons (21) aborde le deuxième banc de poissons (31), dans lequel à l'étape e), le deuxième navire d'observation de poissons (21) traverse le deuxième banc de poissons (31) tout en détectant optiquement le deuxième banc de poissons (31).

5. Procédé de réduction de prises accessoires selon l'une quelconque des revendications 3 à 4, **caractérisé en ce que** ledit au moins un premier navire d'observation de poissons (20) s'approche à l'étape h) du premier banc de poissons au moyen d'un sonar actif.

6. Procédé de réduction de prises accessoires selon l'une quelconque des revendications 3 à 5, **caractérisé en ce qu'**à l'étape h), ledit au moins un premier navire d'observation de poissons (20) aborde le premier banc de poissons au moyen d'un sonar passif, ledit au moins un premier navire de pêche (10) émettant activement des impulsions de sonar et ledit au moins un premier navire d'observation de poissons (20) détectant les impulsions de sonar réfléchies par le premier banc de poissons (30) .

7. Procédé de réduction de prises accessoires selon l'une quelconque des revendications précédentes, **caractérisé en ce qu'**à l'étape a), en outre au moins un deuxième type de poisson est spécifié qui n'est pas à pêcher.

8. Procédé de réduction de prises accessoires selon l'une quelconque des revendications précédentes, **caractérisé en ce qu'**à l'étape a), en outre au moins une première taille de poisson est spécifiée, la première taille de poisson étant spécifiée sous forme de taille minimale de pêche.

9. Procédé de réduction de prises accessoires selon l'une quelconque des revendications précédentes, **caractérisé en ce qu'**à l'étape e), ledit au moins un premier navire d'observation de poissons (20) avance tout droit lors de la traversée du premier banc de poissons (30) jusqu'à ce qu'il soit reconnu optiquement par la diminution de la densité de poissons que l'extérieur du banc de poissons (30) est atteint, et ledit au moins un premier navire d'observation de poissons (20) modifie alors sa direction de retour vers le banc de poissons (30).

10. Procédé de réduction de prises accessoires selon l'une quelconque des revendications 1 à 8, **caractérisé en ce qu'**à l'étape e), ledit au moins un premier navire d'observation de poissons (20) estime un centre de gravité du banc de poissons (30) lors de la traversée du premier banc de poissons (30) d'après la densité de poissons observée et le mouvement, et dans lequel ledit au moins un premier navire d'observation de poissons (20) calcule son mouvement par rapport au centre de gravité du banc de poissons (30).

11. Procédé de réduction de prises accessoires selon l'une quelconque des revendications précédentes, **caractérisé en ce qu'**à l'étape e), la détection optique est effectuée au moyen d'au moins une première caméra (40), au moins un premier navire d'observation de poissons (20) présentant au moins un premier dispositif de projection et projetant avec celui-ci au moins deux lignes parallèles, les au moins deux lignes parallèles présentant un espacement constant indépendant de la distance jusqu'audit au moins un premier navire d'observation de poissons (20).

12. Procédé de réduction de prises accessoires selon l'une quelconque des revendications précédentes, **caractérisé en ce que** ledit au moins un premier navire d'observation de poissons (20) mesure en plus la température, la salinité, la teneur en CO₂, la teneur en O₂, la concentration en phosphate, la concentration en nitrate, la conductibilité, la pression et/ou la concentration en plancton.

13. Procédé de réduction de prises accessoires selon l'une quelconque des revendications précédentes, **caractérisé en ce que** ledit au moins un premier navire d'observation de poissons (20, 21), pendant la traversée du premier banc de poissons (30) à l'étape e), dérive sans propulsion au moins pendant un premier intervalle de temps, ledit au moins un premier navire d'observation de poissons (20, 21) dérivant sans propulsion par intervalles pendant la traversée du premier banc de poissons (30) à l'étape e).
